(19) Europäisches Patentamt

European Patent Office

Office européen des brevets

(11) **EP 0 796 010 B1**

## (12) EUROPEAN PATENT SPECIFICATION

(45) Date of publication and mention
of the grant of the patent:
**01.08.2001 Bulletin 2001/31**

(51) Int Cl.⁷: $H04N\ 5/21$

(21) Application number: **96103896.5**

(22) Date of filing: **12.03.1996**

(54) **Noise reduction circuit for a TV receiver**

Schaltung zur Rauschverminderung für einen Fernsehempfänger

Circuit de réduction de bruit pour un récepteur de télévision

(84) Designated Contracting States:
**DE FR GB IT**

(43) Date of publication of application:
**17.09.1997 Bulletin 1997/38**

(73) Proprietor: **MATSUSHITA ELECTRIC INDUSTRIAL CO., LTD.**
**Osaka 571 (JP)**

(72) Inventors:
• **Hinrichs, Timm**
**64287 Darmstadt (DE)**
• **Heiss, Rainer, Dr.**
**63322 Roedermark (DE)**
• **Shigetani, Yoshiro**
**567 Ibaraki, Osaka (JP)**

(74) Representative: **Grünecker, Kinkeldey, Stockmair & Schwanhäusser Anwaltssozietät**
**Maximilianstrasse 58**
**80538 München (DE)**

(56) References cited:
| | |
|---|---|
| **EP-A- 0 566 412** | **EP-A- 0 578 311** |
| **DE-A- 3 619 223** | **GB-A- 2 138 237** |
| **GB-A- 2 173 066** | **GB-A- 2 209 447** |
| **GB-A- 2 250 888** | **GB-A- 2 287 153** |
| **US-A- 5 119 195** | |

## Description

The present invention relates to a noise reduction circuit for a TV receiver and relates in particular to a digital circuit for noise reduction in modern high and wide screen TV receivers.

One well-known prior art noise reduction system is based on spatial noise reduction, where the signal is filtered in horizontal and vertical directions. For the filtering either non-recursive filters or median filters are used. The hardware complexity of such systems is relatively low making them suitable for low and mid range cost TV sets. One disadvantage of these prior art systems may be seen in the loss of information in the vertical and horizontal directions, which causes lack of definition of the picture. Another disadvantage is that the maximum achievable amount of noise reduction is fairly low.

Document GB-A-2 250 888 describes a signal adaptive noise reduction. The amount of noise reduction depends on a difference between an input picture and an output picture. The difference value is converted by an AD-converter to a digital value. The digital value selects a noise reduction level from a plurality of levels provided in a PROM. Only those pixels of the input picture are subjected to a noise reduction having a difference value below a selected threshold. The threshold corresponds to the selected noise reduction level.

Another prior art noise reduction system is based on temporal noise reduction, also known as frame averaging. Frame averaging is considered effective in processing a sequence of image frames which are contaminated by random noise, but in which the change in image information from frame to frame is not great. In case of motion, a simple averaging method will result in a smearing effect. The temporal noise reduction can be improved by using a motion detection unit to control the frame averaging by the detected motion value. Such prior art systems require, however, complex hardware and the achievable noise reduction is still not satisfactory.

It is an object of the present invention to provide a noise reduction circuit for a TV receiver, which has a simple arrangement and which provides improved noise reduction.

This object is solved by the subject matter of claim 1.

Preferred embodiments are the subject matter of the dependent claims.

In the following preferred embodiments of the present invention are described in conjunction with the accompanying drawings, which show:

Figure 1, a simplified diagram of a preferred embodiment of the noise reduction circuit according to the present invention; and

Figure 2, a simplified diagram of a preferred noise reduction circuit according to the present invention, which may be realised with relatively simple hardware.

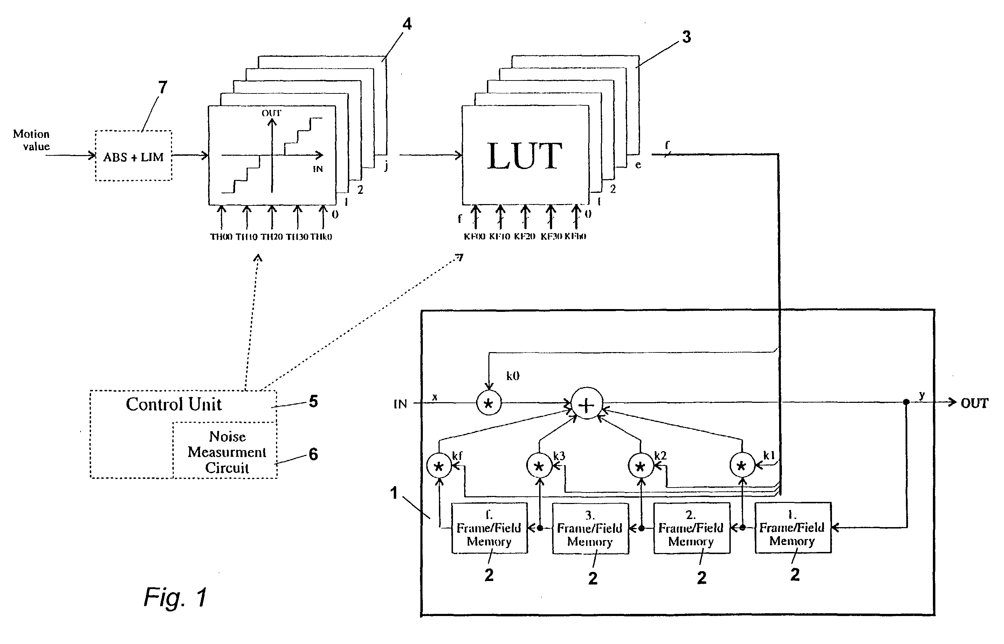

According to the present invention, noise reduction in video signals is achieved by motion adaptive frame or field averaging. The averaging of frames or fields is achieved by means of a recursive temporal filter, an example of which is shown in Figure 1, designated by reference numeral 1.

The delay elements of recursive filter 1 are constituted by frame or field memories 2, wherein the amount of frame/field memories corresponds to the order of the recursive filter.

Using frame memories generally provides better filter quality, since pixels used for the averaging processing are, in this case, at the same physical position. Using field memories will generally lead to a loss of vertical resolution, because pixels of different vertical positions are averaged.

If the input signal to recursive filter 1 is x, output signal y and the filter coefficients are k1 to kf in case of a recursive filter comprising f frame/field memories, then the filter structure may mathematically be expressed as follows:

$$y = k0*x + k1*y*z^{-1} + k2*y*z^{-2} + k3*y*z^{-3} + ... + kf*y*z^{-f}$$

In this equation $z^{-1}$ represents a frame/field-delay of 1 frame/field (z-transformation).

Increasing filter coefficients k1 to kf will result in an increased influence of previous frame/fields and thus, to an increased averaging. Thus, in case of low motion (or no motion), filter coefficients k1 to kf should be considerably high in order to achieve significant noise reduction. In case of significant motion, filter coefficients k1 to kf should be smaller in order to avoid smearing effects.

In accordance with the present invention the selection of the appropriate filter coefficients is therefore controlled in accordance with a detected motion value. In Figure 1 the appropriate filter coefficients are provided by look-up table means 3, which in turn is addressed by a quantisized motion value supplied by quantisation means 4.

The purpose of quantization means 4 is to quantisize a motion value supplied by a motion detection unit (not shown) and thus, to reduce the amount of motion values by which look-up table means 3 is addressed.

For example, the motion detection unit may generate motion values in a range from - 256 to + 255 which are mapped by quantisation means 4 onto a limited number of motion output values. In a preferred embodiment quantisation means 4 may, for example, comprise three threshold values in that the output provided to look-up table means 3 comprises two bits by which four difference motion values may be represented.

The amount and the magnitude of the thresholds can easily be changed by loading different threshold sets TH via a control bus into quantisation means 4. This is illustrated in Figure 1 by different planes 0 to j each representing a different set of threshold values. The quantized motion value output by quantisation means 4 addresses a particular filter coefficient set KFx comprising filter coefficients KOx to kfx used to adjust recursive filter 1. Similar to quantisation means 4, look-up table means 3 may also be reconfigured by loading different coefficient sets via a control bus.

A particular quantized motion value output by quantisation means 4 may result in the readout of a particular corresponding coefficient set from look-up table means 3, which is then applied to recursive filter 1.

A particular quantized motion value applied to look-up table means 3 may, however, also result in the readout of different coefficient sets from look-up table means 3, depending on the result of a noise measurement. In Figure 1 this is illustrated by control unit 5, comprising a noise measurement circuit 6. Control unit 5 is used to load quantisation means 4 and look-up table means 3 with appropriate threshold and coefficient sets. Noise measurement circuit 6 detects the signal to noise ratio of incoming video signals and provides a respective indication of the measurement result. The purpose of this noise measurement circuit is to avoid smearing effects in pictures already having a good signal-to-noise ratio and comprising slow moving objects.

In case of slow moving (or still) objects, the present circuit will generally apply high filter coefficients to recursive filter 1 leading to significant averaging processing. If the signal-to-noise ratio of the processed picture is already satisfactory, this averaging processing would lead to an undesired smearing effect. Therefore, noise measurement circuit 6 provides to control unit 5 with an indication in case that an incoming video signal already has a sufficient signal-to-noise ratio. In response thereto control unit 5 will load or select a different set of threshold values for quantisation means 4 and/or a different set of filter coefficients for look-up table means 3. As mentioned, in this manner it can be prevented that a video signal already has an appropriate signal-to-noise ratio, averaging attempts to improve the signal-to-noise ratio of the image quality if the video signal contains motion.

The noise reduction circuit, preferably, additionally contains an absolute and limiter unit 7, in which the absolute value of the applied motion value is calculated and in which the amount of bit is then reduced.

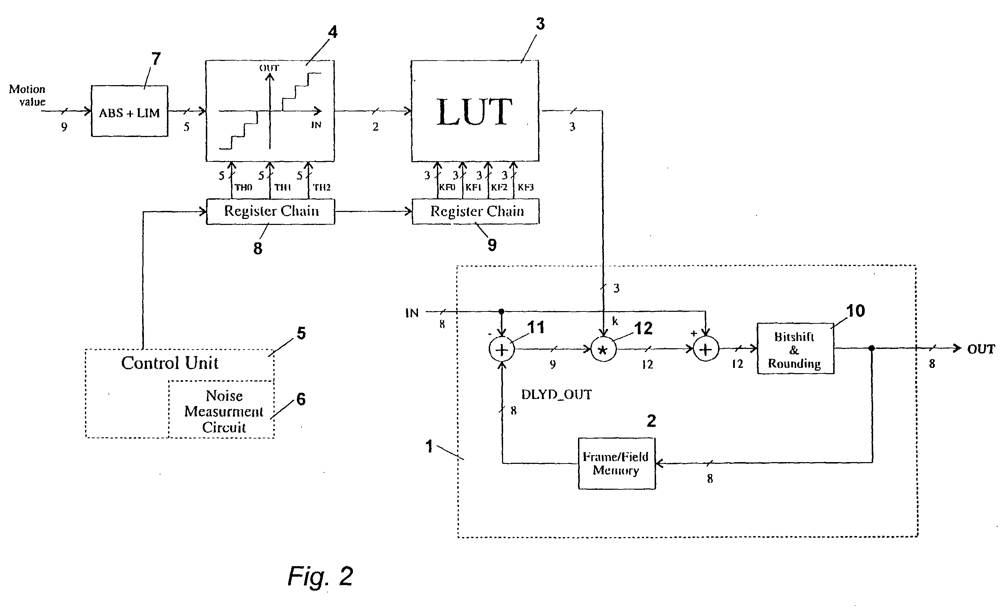

Figure 2 shows a simplified diagram of a preferred embodiment having a further simplified arrangement. In Figure 2 recursive filter 1 is formed by a first order filter comprising a single frame/field memory 2.

The filter structure of the respective recursive filter may be written as:

$$y = (1-k)*x + k*y*z^{-1}$$

As shown in Figure 2, control unit 5 loads threshold value sets and filter coefficient sets via register chain 8 and register chain 9 into quantisation means 4 and look-up table means 3 respectively.

Further recursive filter 1 comprises a bitshift and rounding circuit for reducing the amount of bits finally output by the filter.

Figure 2 further shows preferred bit-formats of the signals input and output by the different units. As shown, motion value provided by the motion detection unit preferably comprises 9 bits. These 9 bit signals are processed by absolute and limiter unit 7 in that finally 5-bit signals are applied to quantisation means 4. The thirty-two possible motion values applied to quantisation means 4 are mapped onto four different quantized motion values output by quantisation means 4. For this mapping quantisation means 4 compares the 5-bit input signal with three different threshold values. Look-up table means 3 outputs in response to each applied quantized motion value, a 3-bit filter coefficient for first order recursive filter 1. In case of a higher order recursive filter, look-up table means 3 would output a corresponding plurality of filter coefficients. As may be further seen from Figure 2, input signal preferably comprise 8-bits, resulting in a 9-bit signal at the output of adder means 11 and a 12-bit signal at the output of multiplier means 12. The 12-bit signal is reduced into an 8-bit signal by bit shift and rounding unit 10, and finally an 8-bit signal is output by recursive filter 1.

It is probable that the luminance and chrominance component of a video signal is filtered simultaneously, and in that two recursive filter units 1 are provided. It is not necessary that control unit 5, quantisation means 4 and look-up table means 3 are also provided twice, but these units may control two recursive filter units 1 used to filter the chrominance and luminance signals respectively.

The chrominance signal consisting of U and V components may be filtered by a single recursive filter 1 by multiplexing the U and V components.

A motion detection unit preferably comprises a frame/field difference circuit and a five tap FIR filter by which a calculated frame/field difference is filtered before it is applied to absolute and limiter means 7.

**Claims**

**1.** A noise reduction circuit for a television receiver comprising:

a recursive filter means (1) for reducing noise in a video signal,

a look-up-table means (3)

**characterized in that**

an amount of noise reduction effected by said recursive filter means (1) being adjustable,

said look-up-table means (3) outputting at least one filter coefficient (k) to be applied to said recursive filter means (1) from a plurality of filter coefficients in order to adjust the amount of noise reduction wherein a smaller coefficient value being selected in case of a larger motion value, and

by a quantization means (4) for converting a motion signal derived from said video signal into a limited number of motion signal values in order to select a particular filter coefficient (k) from said plurality of filter coefficients provided by said look-up-table means (3).

2. A noise reduction circuit according to claim 1, wherein said recursive filter means (1) achieves noise reduction by frame- or field-averaging.

3. A noise reduction circuit according to claim 2, wherein said recursive filter means (1) is first order filter comprising a single frame or filed memory in a backward path of the filter and wherein the filter characteristics are adjusted by a single filter coefficient provided by said look-up-table means (3).

4. A noise reduction circuit according to one of the preceding claims, wherein the motion signal applied to the quantisation means (4) is compared with a set of threshold values stored in the quantisation means (4).

5. A noise reduction circuit according to claim 4, wherein the quantisation means (4) wherein the quantisation means (4) stores three threshold values and converts a five-bit motion signal into a two-bit quantised motion signal.

6. A noise reduction circuit according to claim 4 or 5, wherein the set of threshold values stored in the quantisation means (4) and/or the coefficients stored in the look-up-table means (3) are input by a control unit (5) via a respective bus means.

7. A noise reduction circuit according to claim 6, wherein the set of threshold values stored in the quantisation means (4) and/or the coefficients stored in the look-up-table means (3), may be changed according to characteristics detected in the video signal.

8. A noise reduction circuit according to one of the preceding claims, further comprising a noise measurement circuit (6) for detecting noise in the video signal and for providing a control signal based on which the set of threshold values of the quantisation means (4) and/or the coefficients of the look-up-table means (3) are selected.

9. A noise reduction circuit according to any of the preceding claims, further comprising a motion detection unit generating the motion signal applied to the quantisation means.

10. A television receiver comprising a noise reduction circuit according to any of the preceding claims.

**Patentansprüche**

1. Schaltung zur Rauschverminderung für einen Fernsehempfänger umfassend:

eine rekursive Filtereinrichtung (1) zur Verminderung von Rauschen in einem Videosignal,

eine Einrichtung (3) für eine Nachschlagetabelle,

**dadurch gekennzeichnet,** dass

der Betrag der von der rekursiven Filtereinrichtung (1) bewirkten Rauschverminderung einstellbar ist,

die Einrichtung (3) für eine Nachschlagetabelle zumindest einen Filterkoeffizienten (k) zur Zuführung zu der rekursiven Filtereinrichtung (1) aus einer Mehrzahl von Filterkoeffizienten ausgibt, um den Betrag der Rauschverminderung einzustellen, wobei ein kleinerer Koeffizientenwert im Falle eines größeren Bewegungswertes ausgewählt wird, und

durch eine Quantisierungseinrichtung (4) zur Umwandlung eines Bewegungssignals, das aus dem Videosignal abgeleitet ist, in eine begrenzte Anzahl von Bewegungssignalwerten, um einen bestimmten Filterkoeffizienten (k) aus der Mehrzahl von Filterkoeffizienten auszuwählen, die von der Einrichtung (3) für eine Nachschlagetabelle zur Verfügung gestellt werden.

2. Schaltkreis zur Rauschverminderung nach Anspruch 1, wobei die rekursive Filtereinrichtung (1) eine Rauschunterdrückung durch Vollbild- oder Halbbild-Mittelung erreicht.

3. Schaltkreis zur Rauschverminderung nach Anspruch 2, wobei die rekursive Filtereinrichtung (1) ein Filter erster Ordnung mit einem Vollbild- oder Halbbild-Speicher in einem Rückwärtspfad des Filters ist und wobei die Filtereigenschaften durch einen Filterkoeffizienten eingestellt werden, der von der Einrichtung (3) für eine Nachschlagetabelle bereitgestellt wird.

4. Schaltkreis zur Rauschverminderung nach einem der vorhergehenden Ansprüche, wobei das Bewegungssignal, das der Quantisierungseinrichtung (4) zugeführt wird, mit einem Satz von Schwellwerten verglichen wird, die in der Quantisierungseinrichtung (4) gespeichert sind.

5. Schaltkreis zur Rauschverminderung nach Anspruch 4, wobei die Quantisierungseinrichtung (4) drei Schwellwerte speichert und ein Fünf-Bit-Bewegungssignal in ein zwei-Bit-quantisiertes Bewegungssignal umwandelt.

6. Schaltkreis zur Rauschverminderung nach Anspruch 4 oder 5, wobei der Satz von Schwellwerten, der in der Quantisierungseinrichtung (4) gespeichert ist, und/oder der Koeffizienten, die in der Einrichtung (3) für eine Nachschlagtabelle gespeichert sind, von einer Steuereinheit (5) über eine entsprechende Buseinrichtung zugeführt werden.

7. Schaltkreis zur Rauschverminderung nach Anspruch 6, wobei der Satz von Schwellwerten, der in der Quantisierungseinrichtung (4) gespeichert ist, und/oder der Koeffizienten, die in der Einrichtung (3) für eine Nachschlagtabelle gespeichert sind, gemäß den detektierten Eigenschaften des Videosignals verändert werden können.

8. Schaltkreis zur Rauschverminderung nach einem der vorhergehenden Ansprüche, der außerdem einen Rauschmessschaltkreis (6) zur Detektion von Rauschen in dem Videosignal und zur Bereitstellung eines Steuersignals umfasst, worauf basierend auf dem der Satz von Schwellwerten der Quantisierungseinrichtung (4) und/oder die Koeffizienten der Einrichtung (3) für eine Nachschlagetabelle ausgewählt werden.

9. Schaltkreis zur Rauschverminderung nach einem der vorhergehenden Ansprüche, der weiterhin eine Bewegungsdetektionseinheit zur Erzeugung des Bewegungssignals umfasst, das der Quantisierungseinrichtung zugeführt wird.

10. Fernsehempfänger mit einem Schaltkreis zur Rauschverminderung nach einem der vorhergehenden Ansprüche.

## Revendications

1. Circuit de réduction de bruit destiné à un récepteur de télévision comprenant :

   un moyen de filtre récursif (1) destiné à réduire le bruit dans un signal vidéo,
   un moyen de table de consultation (3)

   **caractérisé par**

   une quantité de réduction de bruit effectuée par ledit moyen de filtre récursif (1) qui est ajustable,
   Ledit moyen de table de consultation (3) qui fournit en sortie au moins un coefficient de filtre (k) devant être appliqué audit moyen de filtre récursif (1) provenant d'une pluralité de coefficients de filtre de manière à ajuster la quantité de réduction de bruit où une valeur de coefficient plus petite étant sélectionnée dans le cas d'une valeur de mouvement plus grande, et
   un moyen de quantification (4) destiné à convertir un signal de mouvement obtenu à partir dudit signal vidéo en un nombre limité de valeurs de signaux de mouvement de manière à sélectionner un coefficient de filtre particulier (k) à partir de ladite pluralité de coefficients de filtre fournis par ledit moyen de table de consultation (3).

2. Circuit de réduction de bruit selon la revendication 1, dans lequel ledit moyen de filtre récursif (1) obtient une réduction de bruit grâce à un moyennage de trames ou de balayages de trame.

3. Circuit de réduction de bruit selon la revendication 2, dans lequel ledit moyen de filtre récursif (1) est un filtre du premier ordre comprenant une seule mémoire de trame ou de balayage de trame dans une voie de retour du filtre et dans lequel les caractéristiques de filtre sont ajustées par un seul coefficient de filtre fourni par ledit moyen de table de consultation (3).

4. Circuit de réduction de bruit selon l'une quelconque des revendications précédentes, dans lequel le signal de mouvement appliqué au moyen de quantification (4) est comparé à un ensemble de valeurs de seuil mémorisées dans le moyen de quantification (4).

5. Circuit de réduction de bruit selon la revendication 4, dans lequel le moyen de quantification (4) mémorise trois valeurs de seuil et convertit un signal de mouvement à 5 bits en un signal de mouvement quantifié à deux bits.

**6.** Circuit de réduction de bruit selon la revendication 4 ou 5, dans lequel l'ensemble de valeurs de seuil mémorisées dans le moyen de quantification (4) et/ou les coefficients mémorisés dans le moyen de table de consultation (3) sont appliqués en entrée par une unité de commande (5) par l'intermédiaire d'un moyen de bus respectif.

**7.** Circuit de réduction de bruit selon la revendication 6, dans lequel l'ensemble de valeurs de seuil mémorisées dans le moyen de quantification (4) et/ou les coefficients mémorisés dans le moyen de table de consultation (3), peuvent être modifiés conformément aux caractéristiques détectées dans le signal vidéo.

**8.** Circuit de réduction de bruit selon l'une des revendications précédentes, comprenant en outre un circuit de mesure de bruit (6) destiné à détecter un bruit dans le signal vidéo et destiné à fournir un signal de commande sur la base duquel l'ensemble de valeurs de seuil du moyen de quantification (4) et/ou les coefficients du moyen de table de consultation (3) sont sélectionnés.

**9.** Circuit de réduction de bruit selon l'une quelconque des revendications précédentes, comprenant en outre une unité de détection de mouvement générant le signal de mouvement appliqué au moyen de quantification.

**10.** Récepteur de télévision comprenant un circuit de réduction de bruit selon l'une quelconque des revendications précédentes.

Fig. 1

EP 0 796 010 B1

*Fig. 2*